# FASCICULE DE BREVET EUROPEEN

(11) **EP 1 569 301 B1**
(45) Date de publication et mention de la délivrance du brevet: **09.05.2007**
(21) Numéro de dépôt: 05002763.0
(22) Date de dépôt: 10.02.2005
(51) Int. Cl.: H01R 4/00, H01R 43/00

(54) **Connexion électrique pour un élément résistif en fibres électriquement conductrices**
Elektrische Verbindung für ein Widerstandselement aus elektrisch leitfähigen Fasern
Electrical connection for a resistive element of electrically conductive fibers

(30) Priorité: 27.02.2004 FR 0401985
(43) Date de publication de la demande: 31.08.2005
(73) Titulaire: EUROCOPTER, 13725 Marignane Cédex (FR)
(72) Inventeur: Brunner, Daniel, 95230 Soisy Sous Montmorency (FR); Amari, André, 95670 Marly La Ville (FR)
(74) Mandataire: Renaud-Goud, Thierry

(56) Documents cités:
- FR-A- 2 719 182
- GB-A- 881 544
- US-A- 2 884 509
- US-A- 5 925 275
- US-A- 5 947 418

## Description

La présente invention concerne un dispositif de connexion électrique d'un élément résistif en fibres électriquement conductrices. Ce type d'élément résistif est notamment utilisé pour réaliser des tapis chauffants en matériaux composites destinés au dégivrage de surfaces aérodynamiques d'aéronef.

Le problème du givrage de surfaces aérodynamiques est bien connu dans l'industrie aéronautique. On entend par givrage la formation plus ou moins rapide d'un dépôt de glace sur certaines parties de l'aéronef (bords d'attaque de pales, d'hélices, d'ailes, d'empennages, et de dérives, pare-brise ou autres). Cette formation de glace résulte de ce qu'en vol, une surface aérodynamique rencontre des gouttelettes d'eau en surfusion dans l'atmosphère. Cet état de surfusion est un état d'équilibre très précaire qui peut être rompu si l'on apporte à la goutte d'eau une très faible quantité d'énergie, sous la forme d'un choc mécanique par exemple. L'eau change alors d'état et passe à l'état solide. Ainsi, une aile d'avion ou une pale de giravion, par exemple, qui traverse une zone de pluie surfondue apporte à toutes les gouttes d'eau assez d'énergie pour que celles-ci passent à l'état solide. La surface aérodynamique se couvre alors de glace en très peu de temps. Ce dépôt de glace alourdit l'aéronef, parfois dans des proportions considérables, altère l'écoulement aérodynamique par modification de la forme de la surface aérodynamique et dégrade ainsi fortement ses performances.

Ce problème est souvent traité en équipant la surface aérodynamique d'un tapis chauffant, ce dernier comportant un élément résistif en fibres électriquement conductrices, du carbone par exemple, intégré dans un substrat composite. En étant traversé par un courant électrique, l'élément résistif chauffe par effet joule la surface aérodynamique sur laquelle il est implanté de manière à la dégivrer ou à l'antigivrer.

Un des points sensibles de cette technologie concerne l'alimentation électrique de l'élément résistif et plus particulièrement la connexion d'au moins une extrémité de cet élément résistif à un ou des fils d'alimentation électrique provenant de l'aéronef.

On connaît, par le document FR 2578377, la solution actuelle qui consiste en une gaine tubulaire déformable à mailles métalliques tricotées. Cette gaine tubulaire autorise la connexion électrique d'un élément résistif en fibres électriquement conductrices à un fil d'alimentation électrique.

La première extrémité de la gaine tubulaire est enroulée autour du fil d'alimentation électrique puis brasée sur celui-ci. La seconde extrémité est enfilée autour d'une extrémité de l'élément résistif. L'ensemble ainsi réalisé est alors placé sur un substrat composite puis recouvert d'un ou plusieurs tissus de verre pour finaliser le drapage du tapis chauffant. La pression appliquée lors de l'opération de polymérisation de ce tapis chauffant permet d'ancrer les mailles métalliques de la gaine tubulaire dans les fibres électriquement conductrices de l'élément résistif.

Bien que donnant satisfaction, ce dispositif de connexion présente toutefois des caractéristiques peu compatibles avec les exigences d'une fabrication industrielle.

En premier lieu, il impose la connexion du ou des fils d'alimentation électriques à l'élément résistif au moment de la confection du tapis chauffant. Dans le cas d'une utilisation de ce tapis chauffant pour dégivrer une pale en matériaux composites de giravion, la présence de fils d'alimentation électriques ayant une longueur souvent supérieure à un mètre empêche l'implantation du tapis chauffant sur la pale au moment du moulage de celle-ci. En effet, les fils d'alimentation électriques, difficilement intégrables au moule de la pale, risquent de générer des défauts importants de moulage.

Dans ces conditions, la solution actuelle ne peut être mise en oeuvre que sur une pale, préalablement polymérisée, lors d'une opération spécifique de collage. Le cycle et le coût de fabrication de la pale sont alors augmentés de façon pénalisante.

En second lieu, la souplesse et la déformabilité importante de la gaine tubulaire conduisent à des difficultés de mise en oeuvre, notamment pour le maintien en position de l'ensemble gaine tubulaire-fil d'alimentation électrique sur l'élément résistif lors du drapage du tapis chauffant. Par ailleurs, la pression de moulage exercée lors de la polymérisation du tapis chauffant peut conduire à des désalignements et des déformations des connexions électriques. Au final, ces défauts se traduisent par une mauvaise qualité des contacts électriques qui peuvent générer localement des échauffements anormaux.

Enfin, la structure tricotée de la gaine tubulaire induit une résistance électrique importante dans le sens longitudinal. Cette résistance limite alors fortement l'intensité du courant électrique transmis à l'élément résistif. Avec les intensités requises pour un fonctionnement optimal du tapis chauffant, un échauffement excessif de la zone de connexion électrique peut ainsi se produire.

On connaît une variante de la solution actuelle qui consiste à braser les fils d'alimentation électrique non plus à une extrémité de la gaine tubulaire mais sur toute la longueur de celle-ci de manière à autoriser le passage d'un courant électrique de forte intensité. Toutefois, ce type de connexion conduit à des surépaisseurs importantes dans la zone de liaison électrique. Dans ces conditions, les surfaces aérodynamiques doivent être spécifiquement aménagées à l'intérieur du domaine qu'elles déterminent pour pouvoir accueillir le dispositif ce qui entraîne parfois une impossibilité d'intégration de ce dispositif sur les surfaces aérodynamiques existantes.

Par ailleurs, l'épaisseur de la connexion devant être minimisée, il est nécessaire d'épanouir les brins du ou des fils d'alimentation électrique sur la surface de la gaine tubulaire lors de l'étamage. Cette opération est délicate et génère souvent une surface peu homogène. Même réalisée par des opérateurs expérimentés, le temps de fabrication est important et le résultat final peu reproductible ce qui n'est bien évidemment pas compatible avec une industrialisation satisfaisante du dispositif.

Un autre embout de liaison représentant l'état de la technique est divulgué par le document US-A-2 884 509.

La présente invention a pour objet de s'affranchir des limitations décrites ci-dessus de manière à pouvoir être industrialisée dans de bonnes conditions.

Selon l'invention, un embout de liaison, disposé sur un élément résistif pourvu d'au moins une couche de fibres électriquement conductrices, permet de connecter électriquement un fil d'alimentation électrique à cet élément résistif. Cet embout est particulièrement remarquable dans la mesure où il comporte au moins une plaquette métallique, dont une face supérieure est destinée à être reliée audit fil d'alimentation, munie d'au moins un organe connecteur, rigide et métallique, de forme sensiblement plane agencée à la première extrémité de la plaquette métallique et relié à au moins une couche de fibres électriquement conductrices dudit élément résistif, la face supérieure de la plaquette métallique étant recouverte d'un revêtement anti-adhésif amovible.

Lors de la confection d'un tapis chauffant, ce revêtement anti-adhésif protège alors la zone de connexion électrique, c'est-à-dire la face supérieure de la plaquette métallique, en empêchant la pénétration de matière, de la résine par exemple, voire même la pollution de cette zone par un produit de démoulage.

Nous verrons par la suite qu'à l'issue du moulage du tapis chauffant, le revêtement anti-adhérent est enlevé ce qui permet de découvrir la face supérieure de la plaquette métallique. Cette dernière étant alors parfaitement propre, elle autorise une soudure de bonne qualité du fil d'alimentation électrique sur la face supérieure de la plaquette.

De façon avantageuse, l'embout de liaison est disposé sur une extrémité de l'élément résistif devant être électriquement connecté à un fil d'alimentation. Pour ce faire, l'organe connecteur a la forme d'un fourreau venant s'emmancher sur l'extrémité de l'élément résistif.

De plus, la surface de l'organe connecteur en contact avec l'élément résistif possède des aspérités ou des crevasses. Sous la pression de moulage, ces dernières s'incrustent dans les fibres électriquement conductrices de l'élément résistif ce qui assure une bonne liaison électrique entre l'organe connecteur et l'élément résistif.

Dans une première variante, l'organe connecteur est avantageusement constitué d'un élément en métal déployé.

Dans une seconde variante, l'organe connecteur est composé d'une tôle poinçonnée et dans une troisième variante, d'une toile métallique tissée.

Enfin dans une quatrième variante, l'organe connecteur est obtenu à partir d'un élément en métal usiné chimiquement.

Par ailleurs, le coût de l'embout de liaison selon l'invention peut être considérablement réduit en basant sa fabrication sur une unique pièce métallique. Dans ces conditions, une première zone non traitée de cette pièce métallique constitue la plaquette métallique. En outre, pour constituer l'organe connecteur, une seconde zone est usinée, par exemple chimiquement, de manière à être pourvue d'aspérités ou de crevasses.

Contrairement à une gaine tubulaire déformable, l'utilisation d'un organe connecteur de forme sensiblement plane présente de multiples avantages.

En effet, la continuité de la structure de cet organe connecteur implique une faible résistance électrique. Contrairement, à la gaine tubulaire tricotée, cette définition autorise le passage d'un courant à fortes intensités sans échauffement excessif de l'organe connecteur. En outre, en fonction de l'intensité du courant à transmettre, la section et la densité de l'organe connecteur est adaptable.

De plus, la rigidité de l'organe connecteur métallique assure un positionnement ainsi qu'un maintien corrects et aisés sur l'extrémité de l'élément résistif lors des opérations de drapage du tapis chauffant. Malgré la pression exercée lors de la polymérisation du tapis chauffant, la connexion électrique ne glisse pas. En outre, l'organe connecteur métallique rigide reste suffisamment déformable pour pouvoir être conformé manuellement au profil d'un moule dans le cas du moulage d'un tapis chauffant en forme.

Un second objet de l'invention réside dans le procédé de fabrication d'un tapis chauffant comportant un élément résistif muni d'au moins un embout de liaison selon l'invention. La face supérieure de la plaquette sur laquelle doit être relié électriquement un fil d'alimentation électrique est recouverte d'un revêtement anti-adhérent avant la polymérisation du tapis chauffant. Ce revêtement, par exemple du scotch en téflon® (marque au nom de la société «DU PONT DE NEMOURS AND COMPANY»), est enlevé à l'issue de la polymérisation pour que le fil d'alimentation puisse être connecté sur la plaquette.

L'embout de liaison combiné au procédé de fabrication décrit ci-dessus autorise donc une connexion du fil d'alimentation électrique à la plaquette métallique postérieure aux opérations de moulage du tapis chauffant ou après le collage de ce dernier sur une surface aérodynamique.

Dans le cas des dégivreurs de pales de giravion, l'ensemble des éléments constituant le tapis chauffant peut donc être intégré au moulage de la pale, réduisant ainsi le coût et le cycle de fabrication de cette pale.

L'invention et ses avantages apparaîtront avec plus de détails dans le cadre de la description qui suit avec des exemples de réalisation donnés à titre illustratif en référence aux figures annexées qui représentent :
- la figure 1, une vue de dessus d'un embout de liaison selon l'invention,
- la figure 2, une coupe d'un élément résistif pourvu d'un embout de liaison selon l'invention, et
- la figure 3, une vue de dessus d'un tapis chauffant.

Les éléments présents dans plusieurs figures distinctes sont affectés d'une seule et même référence.

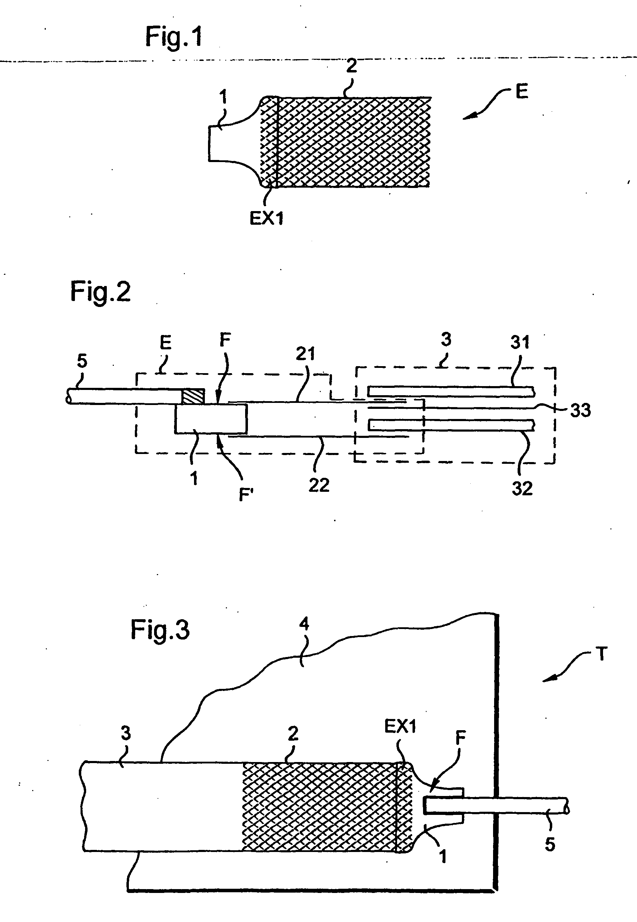

La figure 1 présente un embout de liaison E selon l'invention autorisant la connexion électrique d'un élément résistif à un fil d'alimentation électrique.

Cet embout E comporte un organe connecteur 2, de forme sensiblement plane, rigide et métallique, agencé sur la première extrémité EX1 d'une plaquette métallique 1.

En fonction de l'intensité désirée, l'organe connecteur est déclinable en quatre variantes.

Selon une première variante, l'organe connecteur est composé d'un élément en métal déployé et selon une seconde variante d'une tôle préalablement poinçonnée. Une troisième variante consiste en l'utilisation d'une toile métallique tissée pour constituer l'organe connecteur.

Enfin, selon une quatrième variante, l'organe connecteur est obtenu à partir d'un élément en métal ayant subi un usinage chimique de façon à présenter des aspérités ou des crevasses sur la face destinée à être en contact avec un élément résistif.

La figure 2 présente une coupe d'un élément résistif 3 pourvu d'un embout de liaison E.

L'embout de liaison E comporte une unique plaquette métallique 1 ainsi que deux organes connecteurs 21,22 respectivement agencés sur les faces supérieures F et inférieures F' de cette plaquette métallique 1.

De plus, un fil d'alimentation 5 est relié électriquement à la face supérieure F de cette plaquette métallique 1 par exemple par brasage, soudage ou tout autre moyen mécanique comme le sertissage, le rivetage, le vissage ou le collage avec de la colle électriquement conductrice.

Cet embout E est disposé sur un élément résistif 3 multicouche pourvu de deux couches 31,32 de fibres électriquement conductrices. Ces couches 31,32 ne sont pas en contact électriquement en étant séparées par un séparateur diélectrique 33.

Dans ces conditions, en étant respectivement en contact avec les couches 31,32 de fibres électriquement conductrices, les organes connecteurs 21,22 permettent d'alimenter électriquement l'ensemble de l'élément résistif 3 via le fil d'alimentation 5.

Dans une variante de ce mode de réalisation, l'embout E comprend une pluralité de plaquettes métalliques en contact électriquement les unes avec les autres, chaque plaquette comportant un ou plusieurs organes connecteurs. Ces organes connecteurs permettent d'alimenter un élément résistif de type multicouche.

Le nombre de plaquettes métalliques et d'organes connecteurs est déterminé en fonction de la structure de l'élément résistif et de l'ampérage nécessaire à ce dernier pour remplir sa fonction.

En référence à la figure 3, un élément résistif 3 muni d'un embout de liaison selon l'invention est déposé sur un substrat composite 4 avant d'être recouvert d'un ou plusieurs tissus de verre préimprégnés de manière à constituer un tapis chauffant T.

Avant d'être recouvert par le ou les tissus de verre, la face supérieure F de la plaquette métallique 1 sur laquelle sera connecté le fil d'alimentation 5 est protégée par un revêtement anti-adhérent, du scotch en téflon® par exemple. Lors de la polymérisation du tapis chauffant, la pression appliquée permet d'incruster les aspérités ou les crevasses de l'organe connecteur 2 dans les fibres électriquement conductrices de l'élément résistif. Cette opération assure de ce fait un bon contact électrique entre l'organe connecteur et l'élément résistif ainsi qu'un bon accrochage mécanique de l'organe connecteur dans l'élément résistif après polymérisation.

A l'issue de cette manipulation, le revêtement anti-adhérent est retiré. Le fil d'alimentation 5 peut alors être connecté à la face supérieure F de la plaquette métallique 1, par brasage par exemple.

Si nécessaire, le fil d'alimentation électrique 5 est connecté à la plaquette métallique 1 avant la polymérisation du tapis chauffant T voire même avant l'agencement de l'organe connecteur 2 sur l'élément résistif 3.

De plus, en cas de besoin, le fil d'alimentation 5 est aussi brasé sur au moins une partie de l'organe connecteur métallique 2.

Enfin, dans un mode de réalisation non représenté par une figure, l'organe connecteur est un fourreau dans lequel vient s'emmancher une extrémité de l'élément résistif. La forme du fourreau est alors sensiblement équivalente à celle de l'élément résistif concerné.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications.

## Revendications

1. Embout de liaison (E), disposé sur un élément résistif (3) pourvu d'au moins une couche de fibres électriquement conductrices (31,32), permettant de connecter électriquement un fil d'alimentation (5) audit élément résistif (3),
l'embout de liaison (E) comportant au moins une plaquette métallique (1), dont une face supérieure (F) est destinée à être reliée audit fil d'alimentation (5), munie d'au moins un organe connecteur (2,21,22), rigide et métallique, de forme sensiblement plane agencé à la première extrémité (EX1) de ladite plaquette métallique (1) et relié à au moins une couche de fibres électriquement conductrices dudit élément résistif (3),
**caractérisé en ce que** ladite face supérieur (F) de ladite plaquette métallique (1) est recouverte d'un revêtement anti-adhérent amovible.

2. Embout de liaison selon la revendication 1,
**caractérisé en ce qu**'il est agencé sur une extrémité dudit élément résistif (3).

3. Embout de liaison selon la revendication 2,
**caractérisé en ce que** ledit organe connecteur est un fourreau.

4. Embout de liaison selon l'une quelconque des revendications précédentes,
**caractérisé en ce que** la surface dudit organe connecteur (2,21,22) en contact avec ledit élément résistif (3) comporte des aspérités.

5. Embout de liaison selon l'une quelconque des revendications précédentes,
**caractérisé en ce que** la surface dudit organe connecteur (2,21,22) en contact avec ledit élément résistif (3) comporte des crevasses.

6. Embout de liaison selon l'une quelconque des revendications précédentes,
**caractérisé en ce que**, ladite plaquette métallique (1) et ledit organe connecteur (2) provenant d'une unique pièce métallique, une première zone de ladite pièce métallique constitue ledit organe connecteur (2) et une deuxième zone est usinée pour constituer ladite plaquette métallique (1).

7. Embout de liaison selon l'une quelconque des revendications précédentes,
**caractérisé en ce que** ledit organe connecteur (2,21,22) est obtenu à partir d'un élément en métal ayant subi un usinage chimique.

8. Embout de liaison selon l'une quelconque des revendications 1 à 6,
**caractérisé en ce que** ledit organe connecteur (2,21,22) est composé d'un élément en métal déployé.

9. Embout de liaison selon l'une quelconque des revendications 1 à 6,
**caractérisé en ce que** ledit organe connecteur (2,21,22) est composé d'une tôle poinçonnée.

10. Embout de liaison selon l'une quelconque des revendications 1 à 6,
**caractérisé en ce que** ledit organe connecteur (2,21,22) est composé d'une toile métallique tissée.

11. Procédé de fabrication d'un tapis chauffant (T) comportant un élément résistif (3) muni d'au moins un embout de liaison (5) selon l'une quelconque des revendications précédentes,
**caractérisé en ce que** la face supérieure (F) de la plaquette (1) sur laquelle doit être relié électriquement un fil d'alimentation (5) est recouverte d'un revêtement anti-adhérent avant la polymérisation dudit tapis chauffant (T).

12. Procédé selon la revendication 11,
**caractérisé en ce que** ledit revêtement anti-adhérent est enlevé à l'issue du moulage dudit tapis chauffant (T) de manière à autoriser la connexion électrique dudit fil d'alimentation (1) sur ladite face supérieure (F).

13. Procédé selon l'une quelconque des revendications 11 à 12,
**caractérisé en ce que** ledit revêtement anti-adhérent est du scotch téflon ®.

## Claims

1. A connection end piece (E), arranged on a resistive element (3) provided with at least one layer of electrically conductive fibres (31, 32), enabling a supply wire (5) to be electrically connected to the said resistive element (3), the connection end piece (E) having at least one metal plate (1) whereof an upper face (F) is intended to be connected to the said supply wire (5) and which is equipped with at least one rigid, metal, substantially planar connector member (2, 21, 22) which is arranged at the first end (EX1) of the said metal plate (1) and connected to at least one layer of electrically conductive fibres of the said resistive element (3), **characterised in that** the said upper face (F) of the said metal plate (1) is covered with a removable anti-adhesive coating.

2. A connection end piece according to Claim 1, **characterised in that** it is arranged at one end of the said resistive element (3).

3. A connection end piece according to Claim 2, **characterised in that** the said connector member is a sleeve.

4. A connection end piece according to any one of the preceding claims, **characterised in that** the surface of the said connector member (2, 21, 22) in contact with the said resistive element (3) has rough areas.

5. A connection end piece according to any one of the preceding claims, **characterised in that** the surface of the said connector member (2, 21, 22) in contact with the said resistive element (3) has grooved areas.

6. A connection end piece according to any one of the preceding claims, **characterised in that** the said metal plate (1) and the said connector member (2) are made from a single metal part, and a first zone of the said metal part forms the said connector member (2) and a second zone is machined to form the said metal plate (1).

7. A connection end piece according to any one of the preceding claims, **characterised in that** the said connector member (2, 21, 22) is obtained from a metal element which has undergone a chemical machining treatment.

8. A connection end piece according to any one of Claims 1 to 6, **characterised in that** the said connector member (2, 21, 22) is made up of a metal element which has been opened out.

9. A connection end piece according to any one of Claims 1 to 6, **characterised in that** the said connector member (2, 21, 22) is made up of a punched metal sheet.

10. A connection end piece according to any one of Claims 1 to 6, **characterised in that** the said connector member (2, 21, 22) is made up of a woven metal cloth.

11. A method for making a heating mat (T) including a resistive element (3) equipped with at least one connection end piece (5) according to any one of the preceding claims, **characterised in that** the upper face (F) of the plate (1) to which a supply wire (5) is to be electrically connected is covered with an anti-adhesive coating before the said heating mat (T) is polymerised.

12. A method according to Claim 11, **characterised in that** the said anti-adhesive coating is removed when the said heating mat (T) leaves the mould such that it allows electrical connection of the said supply wire (5) on the said upper face (F).

13. A method according to any one of Claims 11 to 12, **characterised in that** the said anti-adhesive coating is Teflon® tape.

## Patentansprüche

1. Verbindungsaufsatz (E), der auf einem resistiven Element (3) angeordnet ist, das mit mindestens einer Schicht von elektrisch leitenden Fasern (31, 32) versehen ist, der es ermöglicht, einen Versorgungsdraht (5) elektrisch mit dem resistiven Element (3) zu verbinden, wobei der Verbindungsaufsatz (E) mindestens eine Metallplatte (1) aufweist, deren Oberseite (F) dazu bestimmt ist, mit dem Versorgungsdraht (5) verbunden zu werden, die mit mindestens einem steifen und metallischen Verbindungsorgan (2, 21, 22) von im Wesentlichen flacher Form versehen ist, das am ersten Ende (EX 1) der Metallplatte (1) angeordnet und mit mindestens einer Schicht elektrisch leitender Fasern des resistiven Elements (3) verbunden ist,
**dadurch gekennzeichnet, dass** die Oberseite (F) der Metallplatte (1) mit einer entfernbaren Antihaftverkleidung bedeckt ist.

2. Verbindungsaufsatz nach Anspruch 1,
**dadurch gekennzeichnet, dass** er auf einem Ende des resistiven Elements (3) angeordnet ist.

3. Verbindungsaufsatz nach Anspruch 2,
**dadurch gekennzeichnet, dass** das Verbindungsorgan eine Hülse ist.

4. Verbindungsaufsatz nach einem der vorhergehenden Ansprüche,
**dadurch gekennzeichnet, dass** die Oberfläche des Verbindungsorgans (2, 21, 22) in Kontakt mit dem resistiven Element (3) Rauhigkeiten aufweist.

5. Verbindungsaufsatz nach einem der vorhergehenden Ansprüche,
**dadurch gekennzeichnet, dass** die Oberfläche des Verbindungsorgans (2, 21, 22) in Kontakt mit dem resistiven Element (3) Spalten aufweist.

6. Verbindungsaufsatz nach einem der vorhergehenden Ansprüche,
**dadurch gekennzeichnet, dass** die Metallplatte (1) und das Verbindungsorgan (2) von einem einzigen Metallteil stammen, wobei eine erste Zone des Metallteils das Verbindungsorgan (2) bildet und eine zweite Zone bearbeitet wird, um die Metallplatte (1) zu bilden.

7. Verbindungsaufsatz nach einem der vorhergehenden Ansprüche,
**dadurch gekennzeichnet, dass** das Verbindungsorgan (2, 21, 22) ausgehend von einem Metallelement erhalten wird, das eine chemische Bearbeitung erfahren hat.

8. Verbindungsaufsatz nach einem der Ansprüche 1 bis 6,
**dadurch gekennzeichnet, dass** das Verbindungsorgan (2, 21, 22) aus einem Element aus Streckmetall besteht.

9. Verbindungsaufsatz nach einem der Ansprüche 1 bis 6,
**dadurch gekennzeichnet, dass** das Verbindungsorgan (2, 21, 22) aus einem gestanzten Blech besteht.

10. Verbindungsaufsatz nach einem der Ansprüche 1 bis 6,
**dadurch gekennzeichnet, dass** das Verbindungsorgan (2, 21, 22) aus einem Drahtgewebe besteht.

11. Verfahren zur Herstellung einer Heizmatte (T), die ein resistives Element (3) aufweist, das mit mindestens einem Verbindungsaufsatz (5) nach einem der vorhergehenden Ansprüche versehen ist,
**dadurch gekennzeichnet, dass** die Oberseite (F) der Platte (1), auf der ein Versorgungsdraht (5) elektrisch verbunden werden soll, vor der Polymerisation der Heizmatte (T) mit einer Antihaftverkleidung bedeckt wird.

12. Verfahren nach Anspruch 11,
**dadurch gekennzeichnet, dass** die Antihaftverkleidung nach dem Formen der Heizmatte (T) entfernt wird, um die elektrische Verbindung des Versorgungsdrahts (1) auf der Oberseite (F) zu ermöglichen.

13. Verfahren nach einem der Ansprüche 11 bis 12,
**dadurch gekennzeichnet, dass** die Antihaftverkleidung ein Teflon®-Klebeband ist.
